# EUROPEAN PATENT SPECIFICATION

(11) **EP 4 274 197 B1**
(45) Date of publication and mention of the grant of the patent: **18.12.2024**
(21) Application number: 22171584.0
(22) Date of filing: 04.05.2022
(51) Int. Cl.: H04L 67/61

(54) **DATA COMMUNICATION MANAGING COMPONENT AND METHOD FOR PERFORMING GUARANTEED PERFORMANCE DATA COMMUNICATION**
DATENKOMMUNIKATIONSVERWALTUNGSKOMPONENTE UND VERFAHREN ZUR DURCHFÜHRUNG EINER DATENKOMMUNIKATION MIT GARANTIERTER LEISTUNG
COMPOSANT DE GESTION DE COMMUNICATION DE DONNÉES ET PROCÉDÉ PERMETTANT D'EFFECTUER UNE COMMUNICATION DE DONNÉES À PERFORMANCES GARANTIES

(43) Date of publication of application: 08.11.2023
(73) Proprietor: NTT DOCOMO, INC., Chiyoda-Ku Tokyo 100-6150 (JP)
(72) Inventor: KATSALIS, Kostas, 80687 Munich (DE); TRIAY MARQUES, Joan, 80687 Munich (DE); KUNO, Yuya, Tokyo, 100-6150 (JP)
(74) Representative: Viering, Jentschura & Partner mbB Patent- und Rechtsanwälte

(56) References cited:
- DOCQUIER THEO ET AL: "IEC 61850 over TSN: traffic mapping and delay analysis of GOOSE traffic", 2020 25TH IEEE INTERNATIONAL CONFERENCE ON EMERGING TECHNOLOGIES AND FACTORY AUTOMATION (ETFA), IEEE, vol. 1, 8 September 2020 (2020-09-08), pages 246 - 253, XP033835799, DOI: 10.1109/ETFA46521.2020.9212159
- ZHAO LUXI ET AL: "Latency Analysis of Multiple Classes of AVB Traffic in TSN With Standard Credit Behavior Using Network Calculus", IEEE TRANSACTIONS ON INDUSTRIAL ELECTRONICS, IEEE SERVICE CENTER, PISCATAWAY, NJ, USA, vol. 68, no. 10, 10 September 2020 (2020-09-10), pages 10291 - 10302, XP011864449, ISSN: 0278-0046, [retrieved on 20210630], DOI: 10.1109/TIE.2020.3021638
- GARBUGLI ANDREA ET AL: "End-to-end QoS Management in Self-Configuring TSN Networks", 2021 17TH IEEE INTERNATIONAL CONFERENCE ON FACTORY COMMUNICATION SYSTEMS (WFCS), IEEE, 9 June 2021 (2021-06-09), pages 131 - 134, XP033941949, DOI: 10.1109/WFCS46889.2021.9483600

## Description

The present disclosure relates to data communication managing components and methods for performing data communication.

IEEE Time Sensitive Networking (TSN) is a family of standards used to enable deterministic communications. It provides non-negotiable time boundaries for end-to-end transmission latencies and jitter. For this, it includes components to provide synchronization, reliability, latency and resource management.

The fully centralized TSN control plane is included by a Centralized Network Configurator (CNC) and a Centralized User Configurator (CUC) which provide configuration and control information (for example related to scheduling) to TSN interfaces on the network devices and the TSN Talkers/Listeners (data processing devices) respectively. Fully distributed configuration and Centralized Network / Distributed User Model are also possible for the configuration of the network devices and the TSN Talkers/Listeners.

Document: DOCQUIER THEO ET AL: "IEC 61850 over TSN: traffic mapping and delay analysis of GOOSE traffic",2020 25TH IEEE INTERNATIONAL CONFERENCE ON EMERGING TECHNOLOGIES AND FACTORY AUTOMATION (ETFA), IEEE, vol. 1, 8 September 2020 (2020-09-08), pages 246-253, discusses the following: a first mapping of the IEC 61850 protocols to the TSN traffic classes, based on the analysis of both TSN and IEC 61850 protocols; and developing an exact worst-case delay (WCD) analysis for ET traffic.

However, a data processing device may run multiple applications and have a complex internal structure for routing application traffic between interfaces and physical ports and the applications such that the data processing device does not simply map to a single TSN interface for which scheduling information is provided.

Accordingly, mechanisms are desirable which allow supporting data communication techniques and protocols like TSN (in general data communication protocol for data communication with guaranteed performance) in case of complex internal structures of data processing devices running multiple applications.

According to one embodiment, a data communication managing component is provided which is configured to establish, in a data processing device configured to run multiple applications and having a physical port to a communication network, an internal network of components of the data processing device to make, for each of the applications, data destined for the application received from the communication network via the physical port available for the application, supply, to the physical port, for each of the applications, data that the application intends to send via the communication network and enable communication between the applications through the internal network.

The data communication managing component is further configured to generate a representation of the internal network as a network of data link layer interfaces in accordance with a data communication protocol for data communication with guaranteed performance, provide the generated representation to a network controller, wherein the network controller is configured to provide control information for data link layer interfaces to enable data communication in accordance with the data communication protocol, receive scheduling information for the data link layer interfaces of the representation generated by the scheduler and configure the internal network of the data processing device in accordance with the scheduling information.

According to another embodiment, a method for performing data communication according to the data communication managing components described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a communication system for providing TSN.
- Figure 2: illustrates a queuing structure of a TSN port when 802.1Qbv is used.
- Figure 3: illustrates the TSN control plane for the fully centralized case.
- Figure 4: illustrates a host machine, hosting virtualized and non-virtualized applications exposed to CUC.
- Figure 5: illustrates a host machine on which multiple virtual network functions (VNFs) are deployed in the form of virtual machine(s).
- Figure 6: shows a TSN deployment according to an embodiment.
- Figure 7: illustrates an operation of a TMF (TSN Manager Function) according to an embodiment.
- Figure 8: shows a first mode for configuring the internal TSN network of a host machine.
- Figure 9: shows a second mode for configuring the internal TSN network of a host machine.
- Figure 10: illustrates an operation of a TPF (TSN Proxy Function) according to an embodiment when management and orchestration based on ETSI NFV-MANO's framework is used.
- Figure 11: shows a flow diagram illustrating the creation of an (abstract) TSN talker involving the ETSI NFV-MANO's framework.
- Figure 12: shows a flow diagram illustrating the configuration of a virtual TSN (vTSN) talker.
- Figure 13: illustrates a first deployment model for a TPF.
- Figure 14: illustrates a second deployment model for a TPF.
- Figure 15: illustrates a third deployment model for a TPF.
- Figure 16: illustrates a deployment model where each TPF communicates with a single TMF.
- Figure 17: illustrates a deployment model where a TPF communicates with multiple TMFs.
- Figure 18: illustrates a deployment model considering O-RAN (Open Radio Access Network) Alliance's framework.
- Figure 19: shows a flow diagram illustrating a method for performing data communication according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:

It should be noted that one or more of the features of any of the examples above may be combined with any one of the other examples. In particular, the Examples described in context of the device are analogously valid for the method.

According to further embodiments, a computer program and a computer readable medium including instructions, which, when executed by a computer, make the computer perform the method of any one of the above examples are provided.

In the following, various examples will be described in more detail.

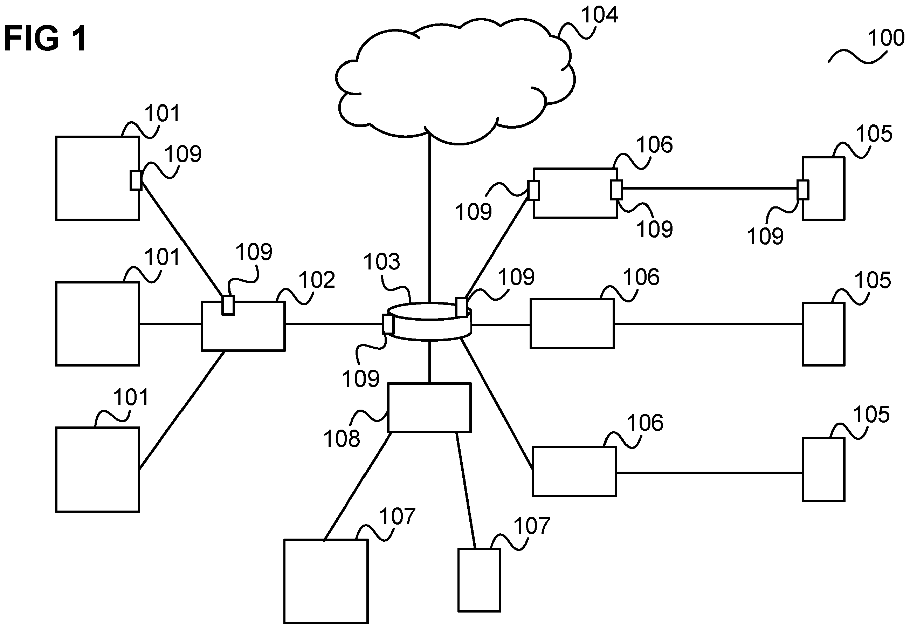

Figure 1 shows a communication system 100 for providing TSN functionality.

The communication system 100 includes, in this example, servers 101, which are connected via a first TSN switch 102 to a router 103. It should be noted that a TSN switch implements a TSN bridge functionality. These terms are used interchangeably herein.

The router 103 is connected to the Internet 104. The communication system 100 further includes first terminal devices 105, wherein each first terminal device 105 is connected via a respective second TSN switch 106 to the router 103.

Further, in this example, second terminal devices 107 are connected via a third switch 108 to the router 103.

The servers 101 and terminal devices 105, 107 are (TSN) endpoint devices (typically referred as TSN Talkers or TSN Listeners).

Each switch 102, 106, 108 can be seen to be the connection point between the router 103 and a respective local area network which includes one or more of the endpoint devices 101, 105, 107.

The endpoint devices 101, 105, the switches 102, 106, 108 and the router 103 support TSN communication functionality. A TSN communication is a communication between endpoints 101, 105, 107 (wherein one acts as TSN Talker and the other as a TSN Listener). The endpoint devices 107 may send/receive TSN traffic, without however supporting TSN communication functionality. In that case device 108 is the entry point to the TSN network.

TSN is a Layer 2 technology. It is thus located below the network layer (layer 3) and above the physical layer (layer 1). For example, on top of TSN, MPLS (Multiprotocol Label Switching), IPv4/6 etc. can operate. It should be noted that the embodiments described herein are agnostic to the overlaying network technology.

TSN functionality can run on an Ethernet port (physical port) of a switch, router and endpoint according to IEEE 802.1Q. TSN functionality can also be supported on the interface level, attached to physical ports. Thus, on each physical port 109, TSN functionality may be implemented. In other words, a TSN port (also referred to as TSN interface or virtual (TSN) port) 109 may be attached to each physical port or be connected to other TSN ports.

For supporting TSN communication, the involved devices (terminal devices, router and switches) provide TSN ports (e.g., TSN 802.1Qbv ports). It should be noted that the description of the embodiments focuses on TSN, but the features described herein may also be applied to other guaranteed performance techniques, i.e. embodiments may be generalized to other guaranteed performance techniques other than TSN.

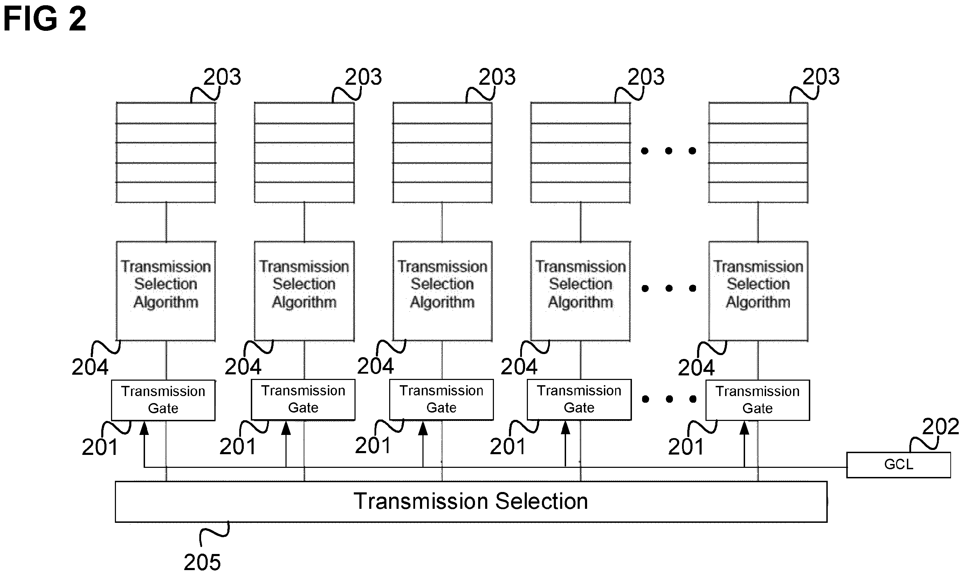

Figure 2 illustrates a queuing structure of a TSN (output) port, i.e. the functionality provided by a TSN port (or TSN interface) according to 802.1Qbv.

According to the queuing structure, there are eight gates 201 (according to 802.1Q2018 in this example). Each gate 201 is either opened or closed in accordance with a gate control list (GCL) 202.

Each gate 201 is associated with a traffic class and has an associated queue 203 into which the data of the traffic class to be transmitted via the gate 201 is put. Further, a transmission selection algorithm 204 (e.g. a credit based shaper (CBS)) may be performed for each gate which is responsible for shaping the traffic of the respective queue 203. A transmission selection mechanism 205 transmits data from open gates via the physical layer, e.g. an Ethernet PHY.

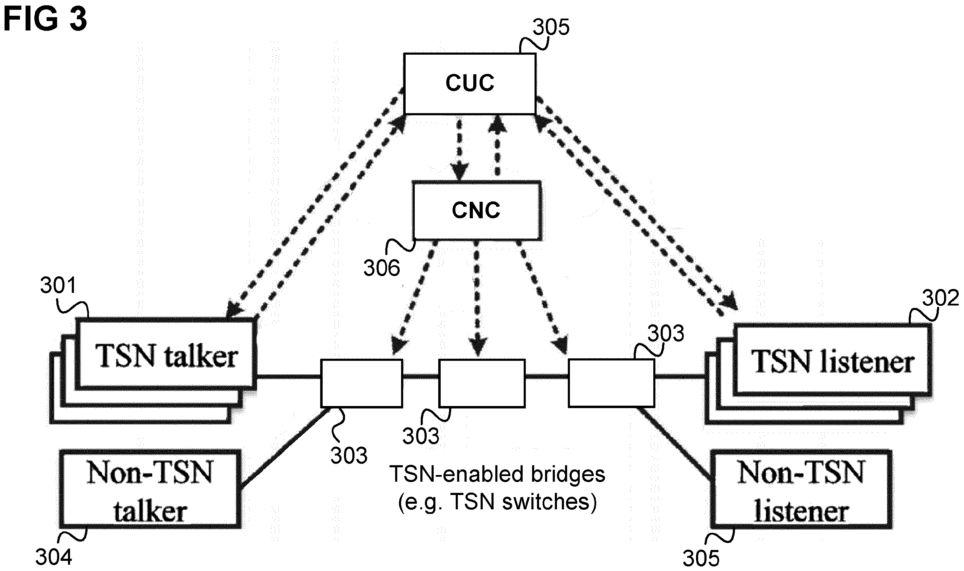

Figure 3 illustrates the TSN control plane.

As explained above, TSN talkers 301 and TSN listeners 302 may be connected via a plurality of TSN-enabled devices 303 (e.g. corresponding to the switches 102, 106, 108 or also the router 103 with TSN bridging capabilities.

Non-TSN talkers 304 and listeners 305 may also be connected to the TSN switches 303. According to the fully centralized model, a Centralized User Configurator (CUC) 305 configures the TSN talkers 301 and listeners 302 with regard to TSN. A Centralized Network Configurator (CNC) 306 configures the switches 303 with regard to TSN. Embodiments are also applicable also when fully distributed but also Centralized Network / Distributed User Model according to 802.1Qcc are used.

The CUC 305 assumes TSN Applications (i.e. (software) applications sending or receiving TSN traffic) are independent from each other.

However, inside a host machine (or host device, i.e. a terminal device, e.g. a computer, having physical layer ports to a communication network (e.g. an Ethernet), which is external with respect to the terminal device) TSN may operate on different levels (e.g., on the virtual interface inside the kernel of a Virtual Machine, on a virtual interface on the host machine created by a hypervisor's virtual switch, on interfaces attached to physical ports etc.)

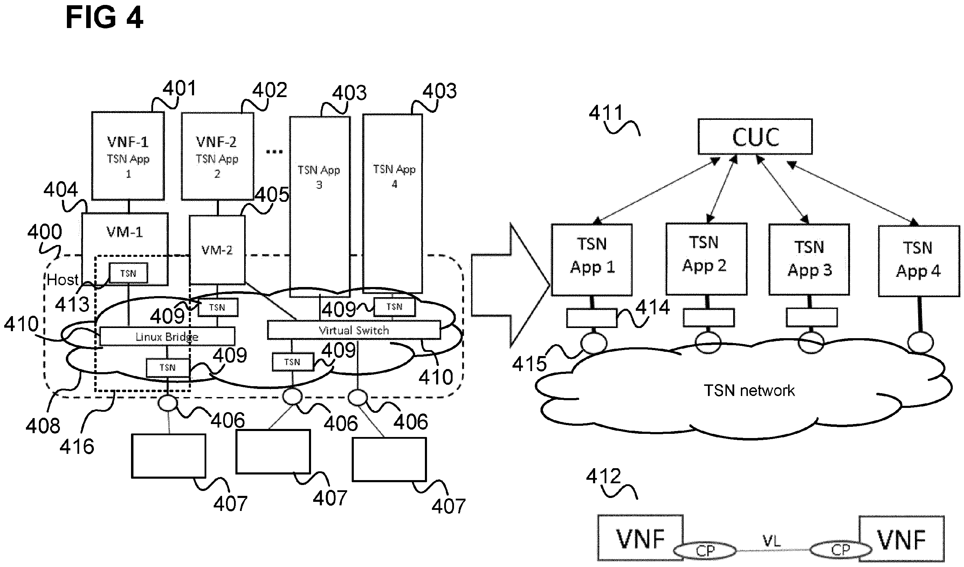

Figure 4 illustrates a host machine 400 (e.g. a server).

The host machine 400 hosts two virtual network functions (VNFs) 401, 402. From the TSN perspective, these are TSN applications. The host machine hosts further TSN applications (e.g. other types of programs sending/receiving TSN traffic) 403. Each VNF 401, 402 runs on a respective virtual machine 404, 405.

The host machine 400 has physical ports 406 (e.g. Ethernet ports) via which it is connected to switches 407.

The host machine 400 has an internal TSN network 408 which provides the connection between the TSN applications 401, 402, 403 (denoted as "TSN App 1" to "TSN App 4") and also between the applications 401, 402, 403 and other applications residing outside the host through the physical ports 406. This involves TSN interfaces 409 on virtual or normal interfaces and physical ports. In order to realize TSN functionality on the interface level multiqueueing functionality is enabled to support TSN features like 802.1Qbv in software and perform appropriate QoS mapping handlers. For the case of interfaces attached to the physical port, multiqueueing drivers in the host machine 400 enable a network card to supports this. The internal TSN network 408 may involve further components like a (e.g. Linux) Bridge and an OVS (Open Virtual Switch). So, the internal TSN network 408 may have a complex structure. Furthermore, in this example, the virtual machine 404 includes a TSN node 413. In the example of figure 4, TSN ports are attached to the left two physical ports.

However, the CUC 305 or the CNC 306, respectively, typically expect a simple structure like the one illustrated by the diagram 411. For example, for the structure indicated by box 416 of a TSN port and a Linux bridge of the TSN network 408 as well as the TSN node 413 of the virtual machine 404, the CUC 305 or the CNC 306, respectively, expect that one (abstract) TSN node 414 hosting a TSN Application, is connected to the TSN network through a TSN port 415.

Furthermore, according to ETSI NFV framework, for VNFs and each Virtual Links (VL) between two VNFs, (abstract) Connection Points (CP) are defined as illustrated by the diagram 412.

So, the following issues arise in such a scenario
1. How to expose VNFs as normal TSN Talkers/Listeners to the TSN control plane.
2. How to map abstract CPs of VNFs to virtualized TSN ports (i.e. TSN ports. implemented in software) or, stated in other words, how to transform a VNF to a TSN application.
3. How to connect VNFs and also associated orchestration and management entities (like ETSI Network Functions Virtualization Management and Orchestration (NFV-MANO)) to TSN control plane entities.
4. How to cope with TSN multiplexing and TSN layers on the TSN node level (i.e. inside TSN nodes)
5. How to hide host node internal TSN network complexity from TSN control plane.
6. How CUC configures the TSN Apps when operating over a shared virtualized infrastructure.

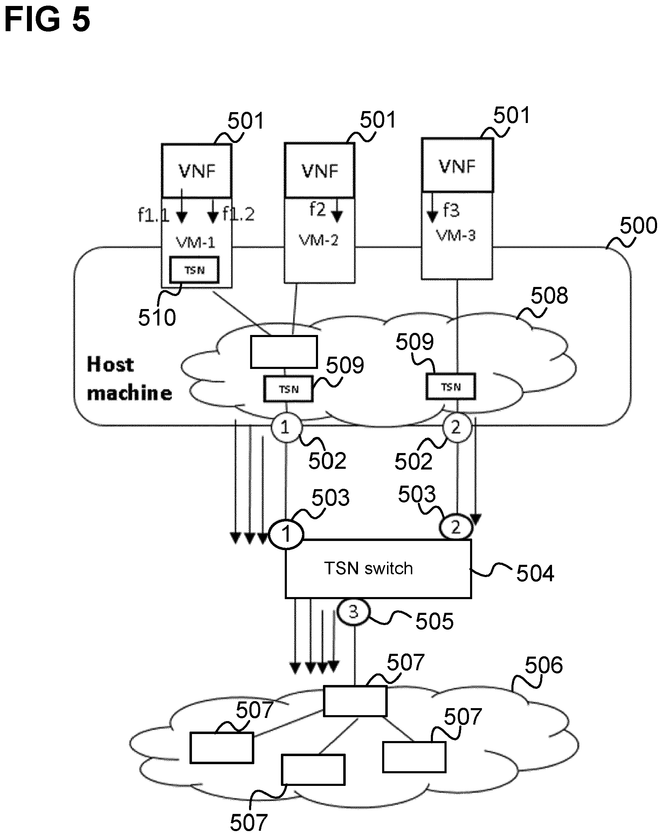

Figure 5 illustrates these issues for a host machine 500 on which three VNFs 501 denoted as VNF 1, VNF2 and VNF3 are deployed in the form of virtual machine(s), and having two physical ports 502 implementing TSN functionality denoted as port "1" and port "2" connected each to a respective physical port 503 of a switch 504 which is connected via a further port 505 to a communication network 506 (having further switches 507).

As an example, it is assumed that the first VNF 601 has two (TSN data) flows f1.1 and f1.2, VNF has a data flow f2 and VNF 3 has a data flow f3.

So, the VNFs (as TSN applications) inform the CUC as follows:
- VNF 1: "I have f1.1 and f1.2"
- VNF 2: "I have f2"
- VNF 3: "I have f3"

As illustrated, it is assumed that VNF 1 and VNF 2 use port 1 and VNF 3 uses port 2.

So, the CUC informs the CNC as follows:
- From port 1: "I have f1.1 and f1.2"
- From port 2: "I have f3"

As explained with reference to figure 4, the host machine 500 has an internal TSN network 508 with TSN ports 509 for connecting the VNFs 501 to the physical ports 502. Further, VNF1 includes a TSN port 510. Conventionally, the CUC and the CNC are not aware that there is a local (i.e. internal) TSN network 508 in the host machine 500. So, conventionally, there is no management and control over this TSN network 508 by the CUC and the CNC. Further, conventionally, the CUC and CNC are not aware of the (from their point of view additional) TSN interface provided by the VM-based TSN-aware application node with TSN port 510.

So, conventionally, the VNF CPs are not isolated from each other since CNC considers all VNFs together as being connected by one TSN port.

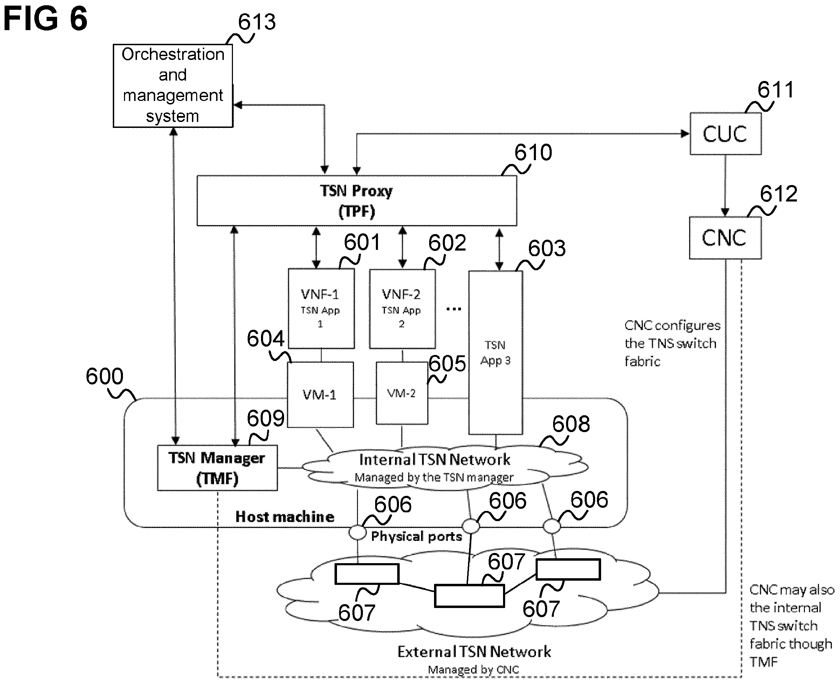

To address this and the above issues 1 to 6, according to various embodiments, a TSN Manager Function (TMF) and a TSN Proxy Function (TPF) (and an interface between the two) are introduced as illustrated in figure 6.

Figure 6 shows a TSN deployment according to an embodiment.

The TSN architecture includes a host machine 600 which, similarly to the host machine 400, hosts two virtual network functions 601, 602 and one or more further TSN applications 603 and each VNF 601, 602 runs on a respective virtual machine 604, 605. In general the host machine (or host device 600) hosts containerized or VM based VNFs but also other (non-VNF) applications deployed over the host machine operating system. (A similar concept applies for bare metal containers and hypervisors).

Further, similarly to the host machine 400, the host machine 600 has physical ports 606 (e.g. Ethernet ports) via which it is connected to TSN switches 607 and has an internal TSN network 608 which provides the connection between the TSN applications 601, 602, 603 and between the TSN applications 601, 602, 603 and the physical ports 606.

The TSN architecture further includes a TSN Manager Function (TMF) 609. The TMF 609
- manages the internal TSN network 608 (e.g. performs Create, Read, Update, Delete (CRUD) operations of managed objects and OAM (Operation, Administration and Maintenance))
- handles the deployment and supports the lifecycle management of the TSN stack either deployed in a virtual machine or container or in virtual or physical ports on the host machine 600. So, the TMF 609 is responsible for the creation, deployment and management of abstract TSN resources for VNFs 601, 602 deployed on top of VMs 604, 605 or containers.
- manages the mapping of the host interfaces and bridges to the virtual interfaces within the VMs 604, 605.
- maps abstract TSN resources to softwarized or hardware based TSN nodes.

Further, the TSN architecture includes a TSN Proxy Function (TPF) 610. The TPF 610
- manages the creation and lifecycle of abstract TSN Talkers/Listeners mapped to VNFs.
- acts as a mediator between the TSN control plane (including the CUC 611 and CNC 612), TMFs 609 deployed on physical nodes and virtualization management and orchestration systems 613 like ETSI NFV-MANO or O-RAN SMO (Service Management and Orchestration). For example, the TPF facilitates interaction with the TSN control plane without interrupting normal TSN control plane operations.

TMF 609 and TPF 610 can be realized as a single software entity running inside or outside the host machine 600. Operation of the TMF 609 and the TPF 610 enable the creation and operation of TSN overlay networks. When considering the ETSI NFV framework, VNFDs (Virtual Network Function Descriptors) and NSDs (Network Service Descriptors) may be updated to enable description on the stream level for time critical (or other guaranteed performance requirements) streams. In such a case, updates on the process between VIM (Virtualized Infrastructure Manager) and NFVI (Network Functions Virtualization Infrastructure) responsible for the Host management and control for building the underlying layer 2 network are introduced.

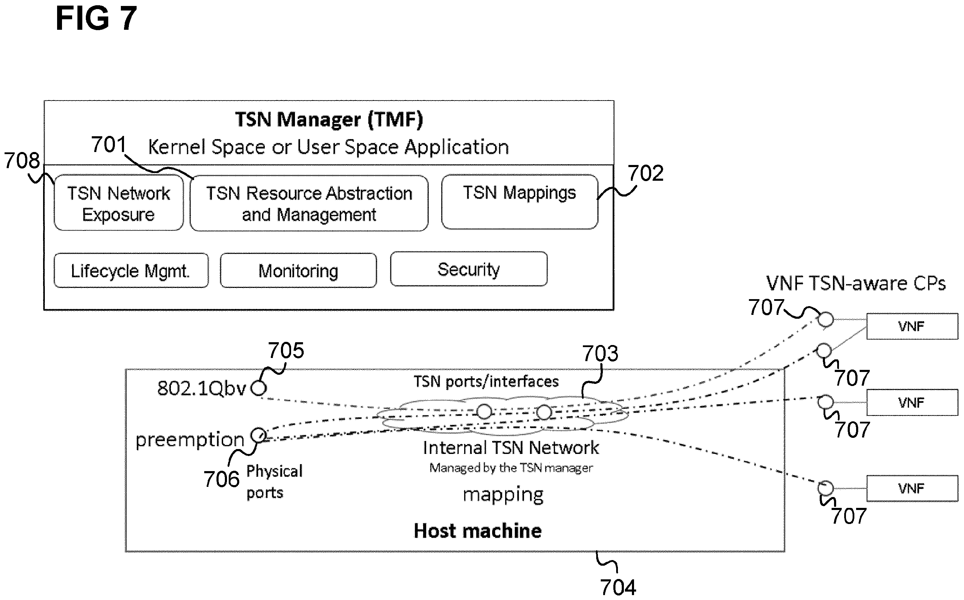

Figure 7 illustrates an operation of a TMF 700 according to an embodiment in more detail.

The TSN Manager Function (TMF) 700 acts as resource manager 701 wherein it performs internal network virtualization and TSN resource abstraction and management 701. In particular, it
- is responsible to create and manage the internal TSN network structure (bridges, create multiqueue interfaces, attach them to the VMs etc).
- is responsible for the OAM of the TSN node ports and the abstract TSN resources considered by VNFs. For example it may analyze the internal TSN network and report to a TSN aware VIM about TSN OAM.
- parses CP/VL/VDU (Virtual Deployment Unit) requirements related to TSN from VIM/NFVI (SDN (Software-Defined Networking)) or from TPF.
- A controlling entity may run as part of the TMF 700 used to decide about and respond to requests from the Orchestrator or VIM like "where can I add VNF-4"? This will affect Affinity and anti-affinity rules for the deployed VNFs.
- preserves isolation and defines TSN boundary control for VNFs
- performs monitoring and lifecycle management, e.g. is responsible for VNF TSN interface upgrading (e.g. attach a new TSN interface/capability to a VNF/VM), e.g. with respect to security. In particular, it is responsible for the lifecycle management of the TSN ports and TSN resources in the internal network.

Further, the TMF 700 support mapping of VNF CPs 707 to the internal TSN network TSN ports 703 and exposes them to the TPF or the VIM 708. In the example shown, a first TSN port 705 supports 802.1Qbv and a second TSN port 706 performs pre-emption(802.1Qbu) . One CP 707 considered by a VNF (may be attached to a TSN port 703 or 705 and operate under 802.1Qbv, while another CP 707 may be attached to a 802.1Qbu TSN port.

Regarding the actual TSN configuration of the ports (e.g. provision of the gate control list in case of 802.1Qbv), the TMF 700 can support two modes regarding TSN configuration of the internal TSN network 608 of the host machine 600.

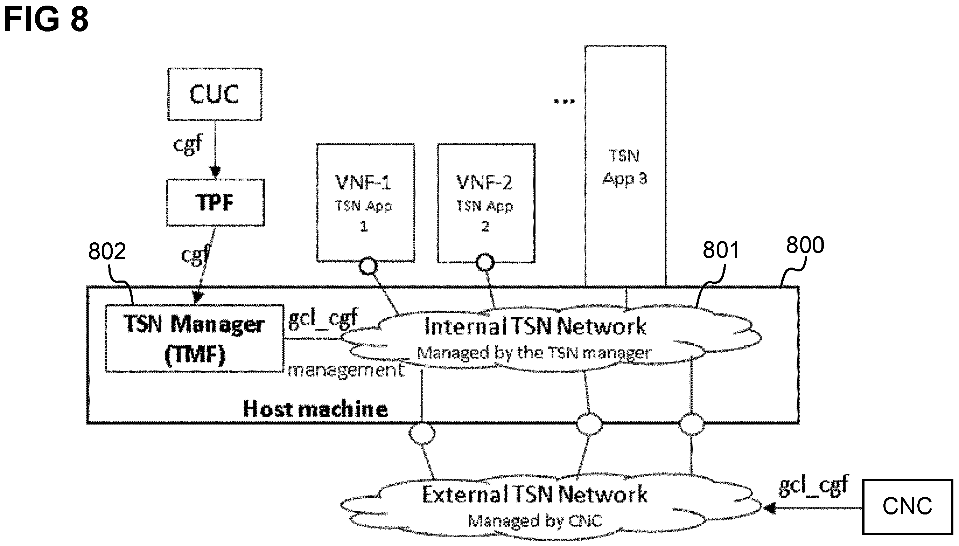

Figure 8 shows a first mode for configuring the internal TSN network 801 of a host machine 800.

According to this first mode, the TMF 802 includes a scheduler to solve locally the schedules provided by CUC (directly or through TPF). It also performs the mapping to the correct TSN ports and the physical ports. It thus enables local TSN solving (when hierarchical TSN nodes exists inside the host machine 800).

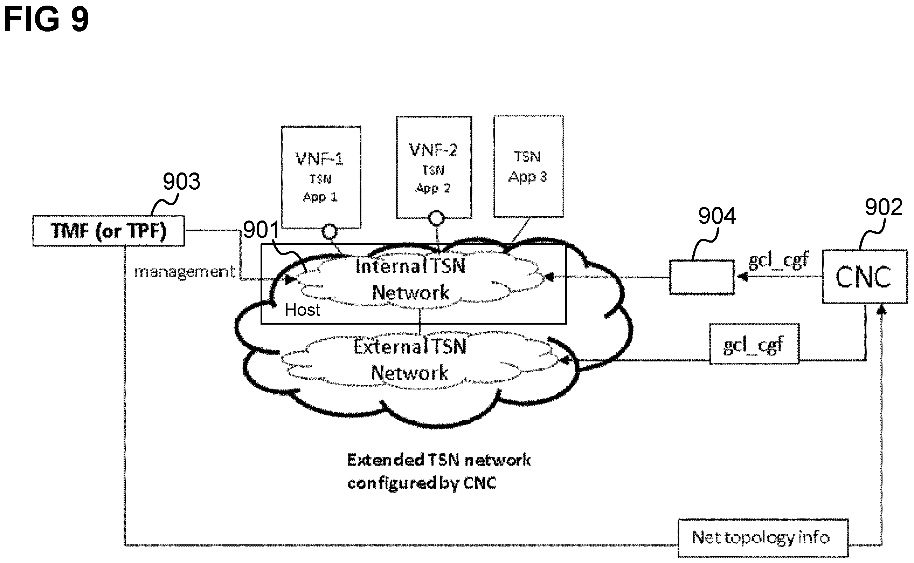

Figure 9 shows a second mode for configuring the internal TSN network 901 of a host machine.

In this mode, the CNC 902 has a global view including the structure of the internal TSN network 901 (and does not necessarily know that the internal TSN network 901 is running in a host machine). The TMF 903 still manages the internal TSN network 901 and the CNC 902 configures it (e.g. supplies the GCL to the TSN ports of the internal TSN network 901, possibly via an intermediate component 904). The TMF 903 may fully or partially expose the structure of the internal TSN network 901.

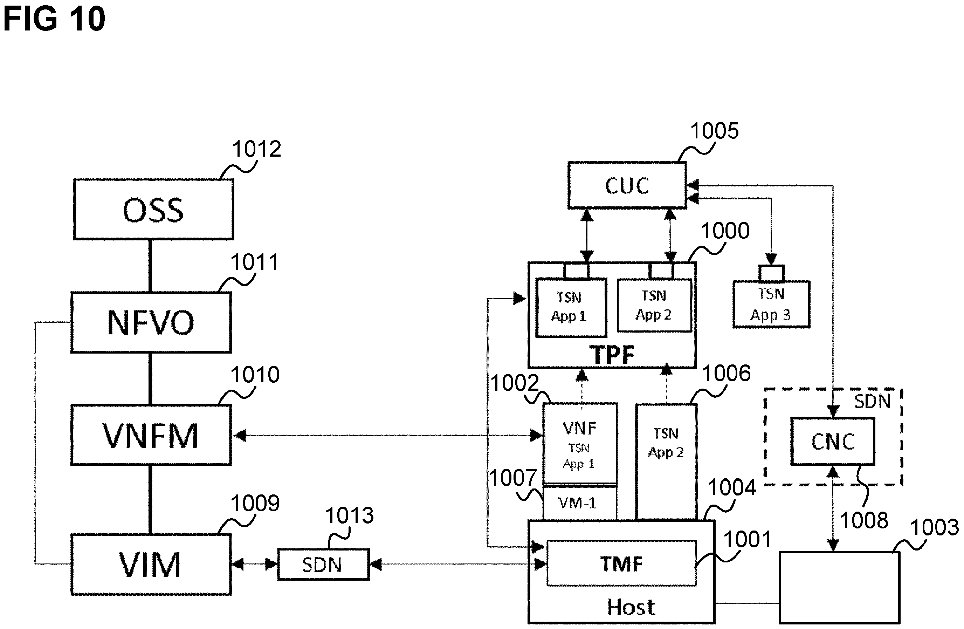

Figure 10 illustrates an operation of a TPF 1000 according to an embodiment in more detail.

The TPF 1000 together with a TMF 1001 enable TSN programmability for a VNF 1002 running on a virtual machine 1007 and hosted by host machine 1004.

The TSN control plane (in particular CUC 1005) only sees TSN Talkers and Listeners running on the host machine 1004 like the VNF 1002 and a further (non-VNF) TSN application 1006 through interaction with the TPF 1000.

The TPF 1000 creates an abstract TSN endpoint mapped to the VNF or the TSN application (for each VNF and each TSN application deployed on the host machine 1004). It exposes TSN endpoints for the VNF 1002 and the TSN application 1006.

The TPF 1000 is further responsible to parse stream requirements related to TSN (from the VNF 1002 or the virtual machine 1007 on which the VNF 1002 is running) and sends them to the TMF 1001 (e.g. for optimizing local TSN network design).

The TPF 1000 knows all TSN applications 1002, 1006 and their TSN configuration and capabilities running the host machine 1004.

For each VNF 1002 and (non-VNF) TSN application, the TPF 1000 passes the TSN configuration received by the CUC also to the TMF. TPF 1000 and TMF 1001 jointly orchestrate the actual configuration of the TSN application (e.g., TSN App 1) based on CUC configuration. Internal TSN network configuration depends on the mode described in the previous figures.

In addition, a management and orchestration system, e.g., based on ETSI NFV-MANO framework may be considered, For instance, a VIM 1009 (connected to a VNFM (VNF Manager) 1010 and a NFVO (NFV Orchestrator) 1011, which is in turn connected to an OSS (Operation Support System) 1012 may communicate with the TMF 1001:
- directly : VIM -> (Network controller like SDN 1013) -> TMF
- through TPF : VIM -> TPF -> TMF

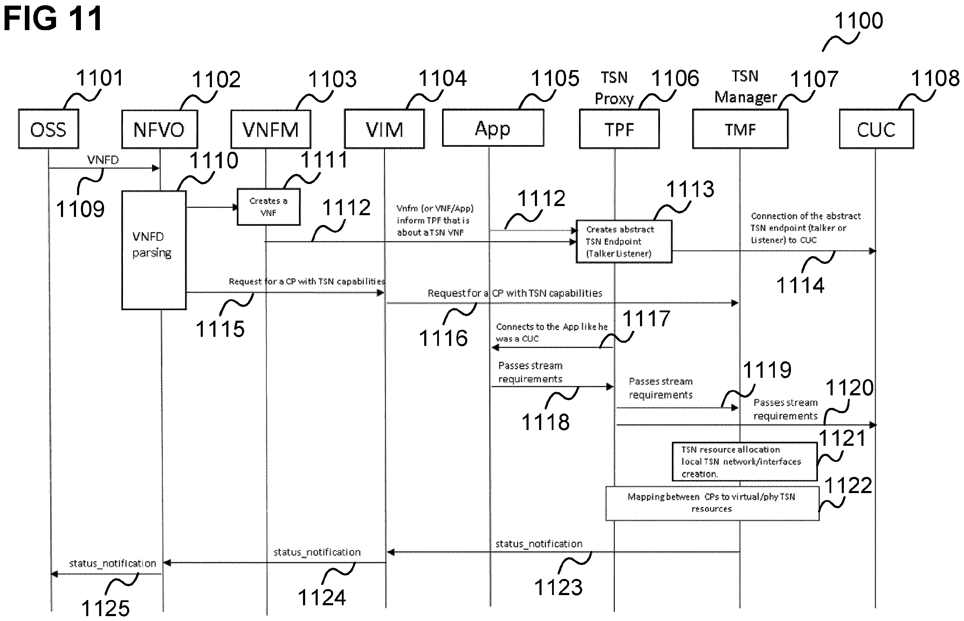

Figure 11 shows a flow diagram 1100 illustrating the creation of an VNF based TSN talker when considering the ETSI NFV-MANO framework.

An OSS 1101, an NFVO 1102, a VNFM 1103, a VIM 1104, a TSN application 1105 (hosted by a VNF) , a TPF 1106, a TMF 1107 and a CUC 1108, e.g. as in figure 10, are involved in the flow.

In 1109, the OSS 1101 sends a request to instantiate a VNF, referencing to a respective VNFD, to the NFVO 1102. The NFVO 1102 parses the VNFD in 1110 and triggers the VNFM 1103 to create a corresponding VNF in 1111. The VNF hosts the TSN application 1105.

In 1112, the VNFM 1103 or the TSN application 1105 informs the TPF 1106 that the new TSN application 1105 is hosted by the VNF. In 1113, the TPF 1106 creates an (abstract) TSN endpoint (Listener or Talker) for the TSN application 1105. In 1114, the TPF 1106 establishes a connection between the established TSN endpoint (i.e. between TSN application 1105) and the CUC 1108.

In 1115, the NFVO 1102 sends a request for a connection point (CP) with TSN capabilities to the VIM 1104 which the VIM 1104 forwards to the TMF 1107 in 1116. It should be noted that the VIM 1104 could also forward the request to TPF 1106 and then from there to TMF 1107. NFVO requests towards the VIM for CP can be also originated by VNFM towards the VIM.

In 1117, the TPF 1106 connects to the TSN application 1105 in the manner of a CUC. In 1118, the TSN application 1105 passes stream requirements to the TPF 1106 which the TPF 1106 forwards to the TMF 1107 in 1119 and to the CUC 1108 in 1120.

In 1121, the TMF 1107 performs TSN resource allocation. This includes the creation or update of an internal TSN network (including interfaces between the components of the TSN network).

In 1122, the TPF 1106 and the TMF 1107 perform a mapping between connection points and virtual and/or physical TSN Ports and TSN resource allocation.

In 1123, the TMF 1107 sends a status notification to the VIM 1104 (possibly via the TPF 1106) which the VIM 1104 forwards to the NFVO 1102 in 1124 and which the NFVO 1102 forwards to the OSS 1101 in 1125. In case requests towards VIM for CP are originated by VNFM, status notification is sent to VNFM.

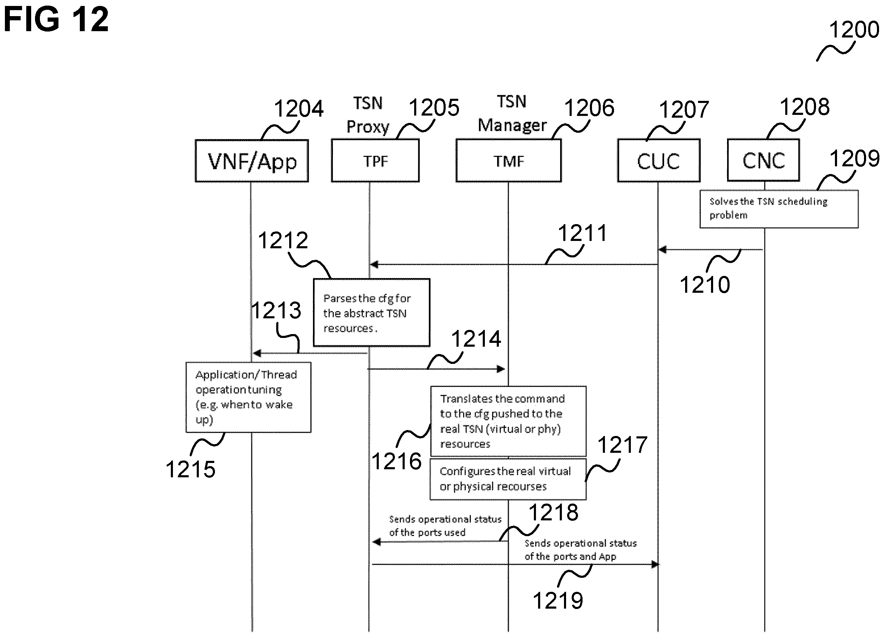

Figure 12 shows a flow diagram 1200 illustrating the configuration of a TSN Talker hosted in a VNF following the first configuration mode, when considering the ETSI MANO architecture.

An OSS 1201, an NFVO 1202, a VNFM 1203, a TSN application or virtual network function 1205, a TPF 1205, a TMF 1206, a CUC 1207 and a CNC 1208, e.g. as in figure 10, are involved in the flow.

In 1209, the CNC 1208 determines a TSN configuration and sends it to the CUC 1207 in 1210.

In 1211, the CUC 1207 forwards the configuration to the TPF 1205.

In 1212, the TPF 1205 parses the configuration for configuration information for the abstract TSN port which is mapped to the abstract VNF CP and forwards the found configuration information to the TSN application or virtual network function 1204 in 1213. Further, the TPF 1205 forwards the configuration information to the TMF 1206 in 1214.

In 1214, the TSN application or virtual network function 1205 performs application or thread operation tuning in accordance with the configuration information that the TPF 1205 has provided.

In 1216, the TMF 1206 generates configuration information for the TSN port resources in the internal network and configures them accordingly in 1217.

In 1218, the TMF 1206 sends an indication of the operational status of the TSN ports used in the internal network to the TPF 1105.

In 1219, the TMF 1206 sends an indication of the operational status of the TSN ports used in the internal network to the TPF 1205, which in turn informs CUC 1207 about the configuration status.

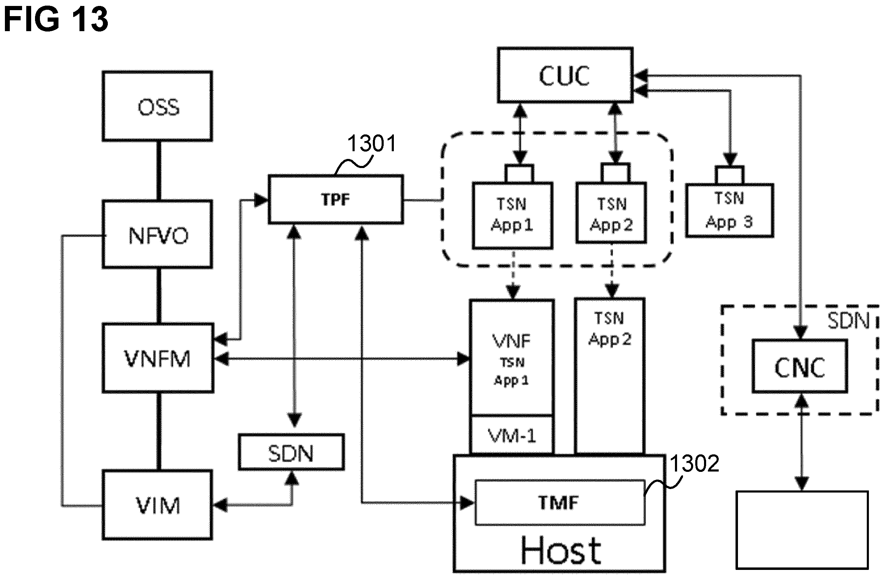

Figure 13 illustrates a first deployment model for a TPF.

In this deployment model, TPF 1301 and TMF 1302 are decoupled. TPF 1301 acts as a TSN plug-in. For example, it may be implemented inside an SDN controller as a TSN plug-in.

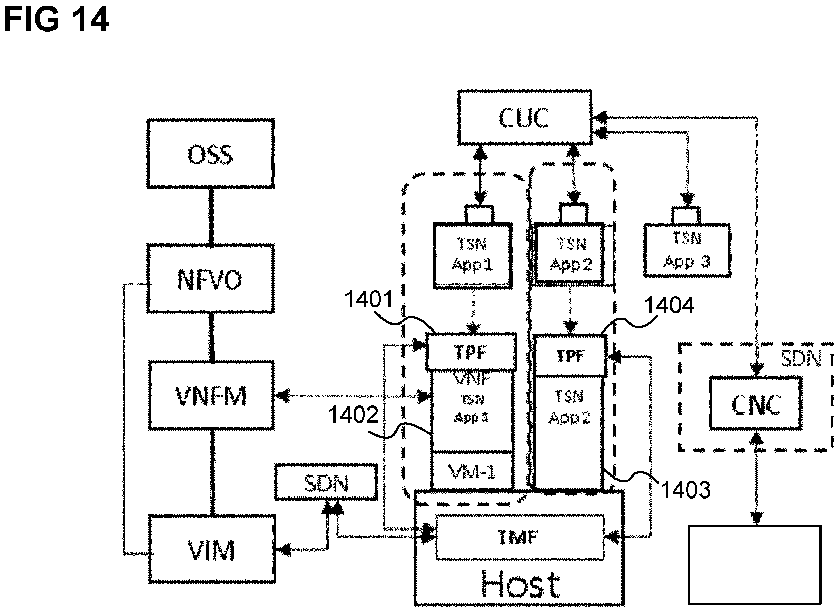

Figure 14 illustrates a second deployment model for a TPF.

In this deployment model, a local TSN proxy instance 1401 runs inside each VNF 1402 or TSN application 1403.

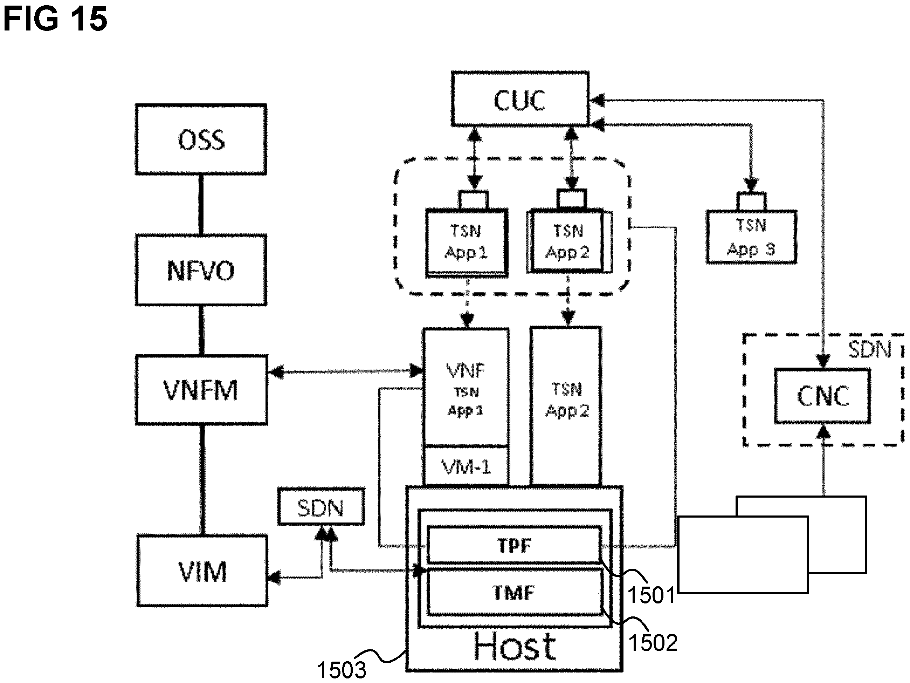

Figure 15 illustrates a third deployment model for a TPF.

In this deployment model (from an implementation point of view) TMF 1501 and TPF 1502 are realized as a single software entity, i.e. TMF 1501 and TPF 1502 are implemented together (e.g., in the host machine 1503 or operating system (OS) responsible for virtualization etc. and there may be shared functionality. Alternatively, they may run on a data processing device outside (external to) the host machine 1503.

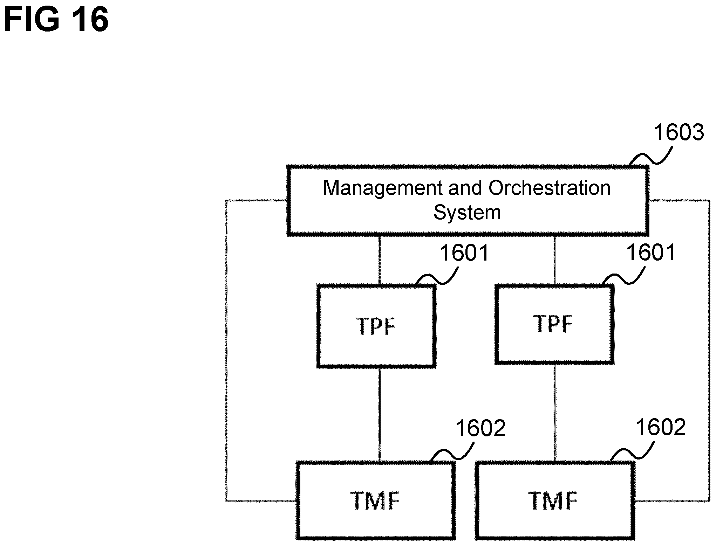

Figure 16 illustrates a deployment model where each TPF 1601 communicates with a Management and Orchestration System 1603 and with a single TMF 1602.

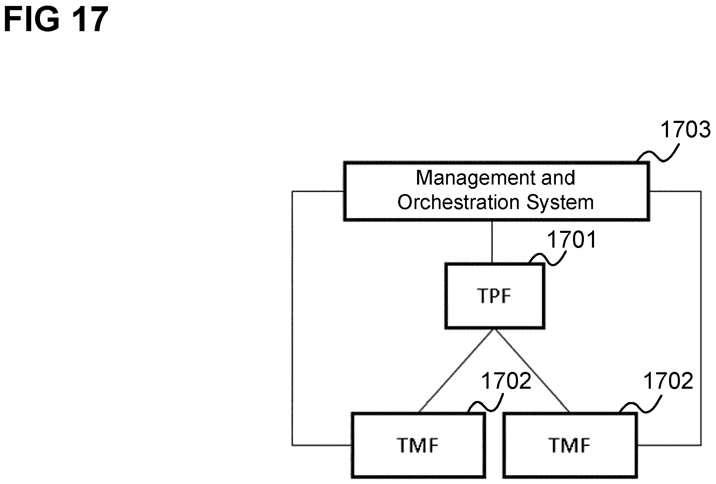

Figure 17 illustrates a deployment model where a TPF 1701 communicates with a Management and Orchestration System 1603 and with multiple TMFs 1702.

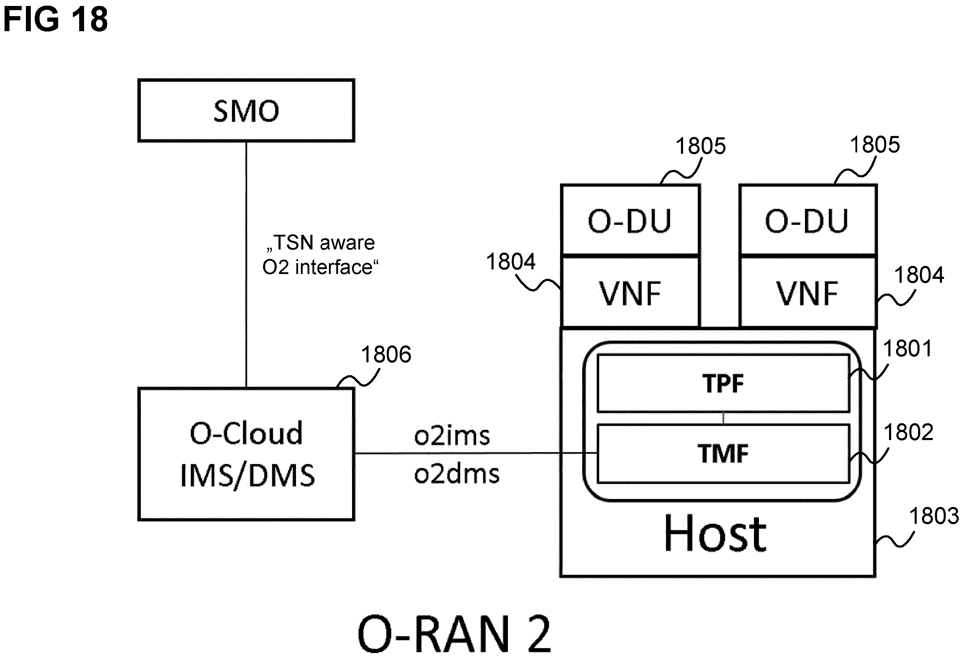

Figure 18 illustrates a deployment model for O-RAN framework.

A TPF 1801 and a TMF 1802 are implemented in a host machine 1803 which further implements VNFs 1804 and associated distributed units 1805 (applications).

The TMF 1802 is connected to an O-Cloud 1806 including IMS (Infrastructure Management Services) and DMS (Deployment Management Services). The O-Cloud is connected to SMO (Service Management & Orchestration) 1807.

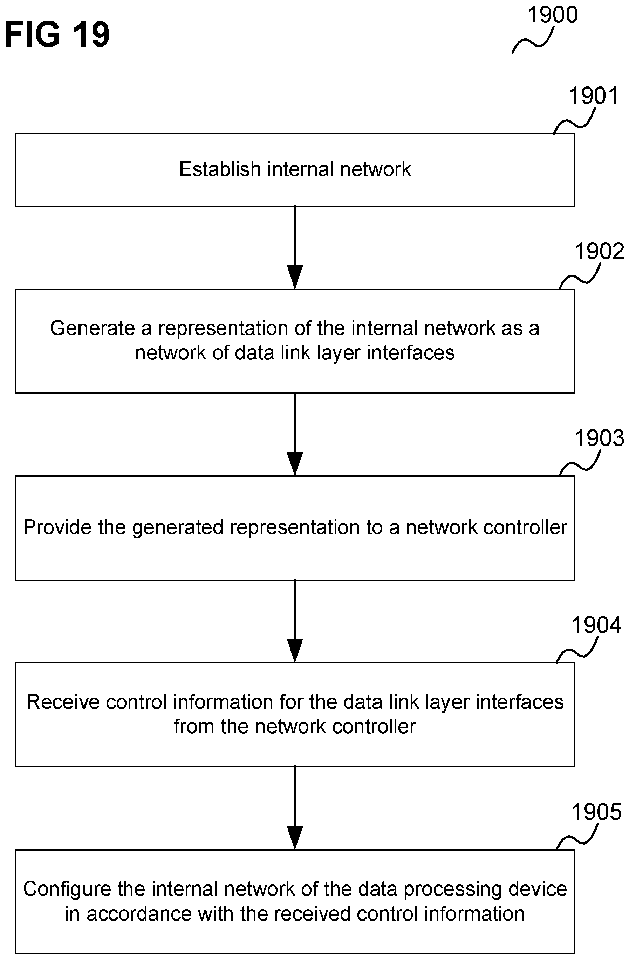

In summary, according to various embodiments, a method for performing data communication is provided as illustrated in figure 19.

Figure 19 shows a flow diagram 1900 illustrating a method for performing data communication.

In 1901, in a data processing device configured to run multiple applications (e.g. including one or more virtual network functions) and having a physical port to a communication network, an internal network of components of the data processing device to
- make, for each of the applications, data destined for the application received from the communication network via the physical port available for the application and
- supply, to the physical port, for each of the applications, data that the application intends to send via the communication network is established.
- enable communication between the applications through the internal network, e.g. make, for each of the applications, data destined for the application received from the communication network via the internal network available for the application, even without using the physical ports.

In 1902 a representation of the internal network as a network of data link layer interfaces in accordance with a data communication protocol for data communication with guaranteed performance is generated.

In 1903, the generated representation is provided to a network controller, wherein the network controller provides control information for data link layer interfaces to enable data communication in accordance with the data communication protocol.

In 1904, control information for the data link layer interfaces of the representation generated by the network controller is received.

In 1905, the internal network of the data processing device is configured in accordance with the control information.

According to various embodiments, in other words, a data communication managing component is provided for a data processing device (wherein the data communication managing component may be implemented internally in the data processing device or external with respect to the data processing device) which maps an internal connection structure to nodes (e.g. TSN ports used in the internal network) according to a communication protocol for which a network controller provides control information. Upon reception of the control information the data communication managing component translates this back to control information for the components of the internal connection structure.

According to various embodiments, the data communication is data communication according to TSN (i.e. Time Sensitive Networking according to IEEE, specifically 802.1Q-2018 considering amendments like 802.1Qbv, 802.1Qbu, 802.1Qcr etc,).

Various embodiments allow providing abstract TSN resources to the orchestration and management layer of an integrated virtualization system and the wiring of TSN functionality to VNF (Virtualized Network Function) Connection Points (CPs).

Various embodiments further enable TSN for containerized and VM-based VNFs and enables connectivity of the TSN control plane with mobile network virtualization Management systems. It allows isolation and slicing of TSN resources on the Node level and allows LCM (life cycle management) and OAM handling per abstract TSN resource. They simplify the TSN problem solving from CUC/CNC point of view. Thus, various embodiments allow enhancing the telecom operator orchestration mechanism with methods, mechanisms and interfaces which can handle TSN technology as a telecom resource. TSN programmable infrastructure can thus be exploited as a service and be part of an integrated orchestration plane managed by OSS. Network Services can be designed using TSN ports for real time VNFs.

TSN can be expected to be increasingly important for use cases like in Industrial Networks but also RAN virtualization (in O-DU (O-RAN Distributed Unit). As a basic methodology SDN (Software-Defined Networking) can be used to control any type of underlying network resources using a standard interface like Netconf or YANG. Furthermore, TSN is already integrated to the 5G system, where the entire 5GC (5G Core) is a exposed as a TSN bridge.

The data link layer interfaces may be multi-queue interfaces having queues for multiple traffic types.

The internal network of components for example includes, as components, at least one bridge and/or at least one multi-queue interface.

The method may be performed and the components of the data communication managing component may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

According to various embodiments, a method for enabling TSN functionality for virtualized and non-virtualized Network functions operating on top of shared physical infrastructure is provided, the method including:
receiving a request for deploying or updating a real time VNF with TSN features requested from an orchestration system or generated due to a LCM operation;
receiving and exposing and translating information about capabilities and status of physical and virtual TSN interfaces and ports of a node (e.g. communication device or host machine);
creating abstract TSN resources allocated to a VNF CP and mapping them to virtual or physical TSN resources; and
determining a TSN resource allocation according to QoS requests and TSN multiplexing architecture on the node according to the interaction with the infrastructure managers to allocate the right resources.

## Claims

1. A data communication managing component (609. 700) configured to
establish, in a data processing device (600) configured to run multiple software applications and having a physical port (606) to a communication network, an internal network of components (608) of the data processing device (600) to
make, for each of the applications (601, 602, 603), data destined for the application (601, 602, 603) received from the communication network via the physical port (606) available for the application (601, 602, 603);
supply, to the physical port (606), for each of the applications (601, 602, 603), data that the application (601, 602, 603) intends to send via the communication network; and
enable communication between the applications (601, 602, 603) through the internal network (608),
generate a representation of the internal network (608) as a network of data link layer interfaces in accordance with a data communication protocol for data communication with guaranteed performance,
provide the generated representation to a network controller (611, 612), wherein the network controller (611, 612) is configured to provide control information for data link layer interfaces to enable data communication in accordance with the data communication protocol;
receive control information for the data link layer interfaces of the representation generated by the network controller (611, 612); and
configure the internal network (608) of the data processing device (600) in accordance with the control information.

2. The data communication managing component (609, 700) of claim 1, wherein the data communication management component is configured to provide the generated representation to a management and orchestration system external to the data processing device (600) and receive data communication protocol information from the orchestration and management system regarding traffic requirements for one or more of the applications.

3. The data communication managing component (609. 700) of claim 1 or 2, wherein the guaranteed performance includes at least a guaranteed maximum latency and/or a guaranteed maximum j itter.

4. The data communication managing component (609, 700) of any one of claims 1 to 3, wherein the multiple applications (601, 602, 603) comprise at least one application running in a virtual machine on the data processing device (600) and/or comprise at least one application running in a container (601, 602, 603) of an application containerization on the data processing device (600).

5. The data communication managing component (609, 700) of any one of claims 1 to 4, wherein the applications (601, 602, 603) comprise at least one application (601, 602, 603) running in a virtual machine on the data processing device (600) and/or comprise at least one application (601, 602, 603) running in a container on the data processing device (600) and the data communication managing component (609, 700) is configured to map a connection point abstraction of a virtual network interface card of the application to one of the data link layer interfaces.

6. The data communication managing component (609, 700) of any one of claims 1 to 5, wherein one of the data link layer interfaces is attached to the physical port (606) and wherein the internal network (608) connects each application to the others of the applications (601, 602, 603) as well as to the data link layer interface attached to the physical port.

7. The data communication managing component (609, 700) of any one of claims 1 to 6, wherein the data processing device (600) comprises multiple physical ports and multiple sets of applications, wherein each application is associated with one of the interfaces of the internal network (608) and the internal network (608) of components makes, for each of the applications, data destined for the application received from the communication network via the interface associated with the application available for the application and supplies data that the application intends to send via the communication network to the interface associated with the application.

8. The data communication managing component (609, 700) of any one of claims 1 to 7, configured to establish and manage the internal network (608) of components of the data processing device (600) in accordance with data communication requirements received from a proxy component which manages the mapping of each of the applications (601, 602, 603) to a corresponding data communication endpoint of the data communication protocol.

9. The data communication managing component (609, 700) of any one of claims 1 to 8, wherein the data link layer interfaces are Time Sensitive Networking capable interfaces.

10. The data communication managing component (609, 700) of claim 9, wherein the network controller (611, 612) is a Centralized User Configurator (611) or a Centralized Network Configurator (612) according to Time Sensitive Networking.

11. The data communication managing component (609, 700) of any one of claims 1 to 10, wherein the communication network is an Ethernet.

12. A method for performing data communication comprising
establishing, in a data processing device (600) running multiple software applications (601, 602, 603) and having a physical port to a communication network, an internal network of components (608) of the data processing device (600) to
make, for each of the applications, data destined for the application received from the communication network via the physical port (606) available for the application;
supply, to the physical port, for each of the applications, data that the application intends to send via the communication network; and
enable communication between the applications (601, 602, 603) through the internal network (608),
generating a representation of the internal network (608) as a network of data link layer interfaces in accordance with a data communication protocol for data communication with guaranteed performance,
providing the generated representation to a network controller (611, 612), wherein the network controller (611, 612) is provides scheduling information for data link layer interfaces to enable data communication in accordance with the data communication protocol;
receive scheduling information for the data link layer interfaces of the representation generated by the scheduler; and
configuring the internal network (608) of the data processing device (600) in accordance with the scheduling information.

## Patentansprüche

1. Eine Datenkommunikations-Verwaltungskomponente (609. 700), die so konfiguriert ist, dass sie
in einer Datenverarbeitungsvorrichtung (600), die so konfiguriert ist, dass sie mehrere Softwareanwendungen ausführt und einen physischen Anschluss (606) an ein Kommunikationsnetz hat, ein internes Netz von Komponenten (608) der Datenverarbeitungsvorrichtung (600) einrichtet, um
für jede der Anwendungen (601, 602, 603) für die Anwendung (601, 602, 603) bestimmte Daten, die vom Kommunikationsnetz über den physischen Port (606) empfangen wurden, für die Anwendung (601, 602, 603) verfügbar zu machen;
für jede der Anwendungen (601, 602, 603) Daten, die die Anwendung (601, 602, 603) über das Kommunikationsnetz zu senden beabsichtigt, an den physischen Port (606) zu liefern; und
eine Kommunikation zwischen den Anwendungen (601, 602, 603) über das interne Netz (608) zu ermöglichen,
eine Darstellung des internen Netzes (608) als ein Netz von Schnittstellen der Datenverbindungsschicht gemäß einem Datenkommunikationsprotokoll für die Datenkommunikation mit garantierter Leistung erzeugt,
die erzeugte Darstellung an einen Netzwerk-Controller (611, 612) bereitstellt, wobei der Netzwerk-Controller (611, 612) so konfiguriert ist, dass er Steuerinformationen für Schnittstellen der Datenverbindungsschicht bereitstellt, um eine Datenkommunikation gemäß dem Datenkommunikationsprotokoll zu ermöglichen;
Steuerinformationen für die Schnittstellen der Datenübertragungsschicht der vom Netzwerk-Controller (611, 612) erzeugten Darstellung empfängt; und
das interne Netzwerk (608) der Datenverarbeitungsvorrichtung (600) in Übereinstimmung mit den Steuerinformationen konfiguriert.

2. Die Datenkommunikations-Verwaltungskomponente (609, 700) nach Anspruch 1, wobei die Datenkommunikations-Verwaltungskomponente so konfiguriert ist, dass sie die erzeugte Darstellung einem Verwaltungs- und Orchestrierungssystem außerhalb der Datenverarbeitungsvorrichtung (600) zur Verfügung stellt und Datenkommunikationsprotokollinformationen von dem Orchestrierungs- und Verwaltungssystem bezüglich Verkehrsanforderungen für eine oder mehrere der Anwendungen empfängt.

3. Die Datenkommunikations-Verwaltungskomponente (609, 700) nach Anspruch 1 oder 2, wobei die garantierte Leistung mindestens eine garantierte maximale Latenz und/oder einen garantierten maximalen Jitter umfasst.

4. Die Datenkommunikationsverwaltungskomponente (609, 700) nach einem der Ansprüche 1 bis 3, wobei die mehreren Anwendungen (601, 602, 603) mindestens eine Anwendung umfassen, die in einer virtuellen Maschine auf der Datenverarbeitungsvorrichtung (600) läuft, und/oder mindestens eine Anwendung umfassen, die in einem Container (601, 602, 603) einer Anwendungscontainerisierung auf der Datenverarbeitungsvorrichtung (600) läuft.

5. Die Datenkommunikations-Verwaltungskomponente (609, 700) nach einem der Ansprüche 1 bis 4, wobei die Anwendungen (601, 602, 603) mindestens eine Anwendung (601, 602, 603) umfassen, die in einer virtuellen Maschine auf der Datenverarbeitungsvorrichtung (600) läuft, und/oder mindestens eine Anwendung (601, 602, 603) umfassen, die in einem Container auf der Datenverarbeitungsvorrichtung (600) läuft, und die Datenkommunikations-Verwaltungskomponente (609, 700) so konfiguriert ist, dass sie eine Verbindungspunktabstraktion einer virtuellen Netzwerkschnittstellenkarte der Anwendung auf eine der Schnittstellen der Datenverbindungsschicht abbildet.

6. Die Datenkommunikations-Verwaltungskomponente (609, 700) nach einem der Ansprüche 1 bis 5, wobei eine der Schnittstellen der Datenverbindungsschicht mit dem physikalischen Port (606) verbunden ist und wobei das interne Netzwerk (608) jede Anwendung mit den anderen Anwendungen (601, 602, 603) sowie mit der mit dem physikalischen Port verbundenen Schnittstelle der Datenverbindungsschicht verbindet.

7. Die Datenkommunikations-Verwaltungskomponente (609, 700) nach einem der Ansprüche 1 bis 6, wobei die Datenverarbeitungsvorrichtung (600) mehrere physische Ports und mehrere Sätze von Anwendungen umfasst, wobei jede Anwendung mit einer der Schnittstellen des internen Netzwerks (608) assoziiert ist und das interne Netzwerk (608) von Komponenten für jede der Anwendungen Daten, die für die Anwendung bestimmt sind, die von dem Kommunikationsnetzwerk über die mit der Anwendung assoziierte Schnittstelle empfangen werden, für die Anwendung verfügbar macht und Daten liefert, die die Anwendung über das Kommunikationsnetzwerk an die mit der Anwendung assoziierte Schnittstelle zu senden beabsichtigt.

8. Die Datenkommunikations-Verwaltungskomponente (609, 700) nach einem der Ansprüche 1 bis 7, die so konfiguriert ist, dass sie das interne Netzwerk (608) von Komponenten der Datenverarbeitungsvorrichtung (600) in Übereinstimmung mit Datenkommunikationsanforderungen einrichtet und verwaltet, die von einer Proxy-Komponente empfangen werden, die die Zuordnung jeder der Anwendungen (601, 602, 603) zu einem entsprechenden Datenkommunikations-Endpunkt des Datenkommunikationsprotokolls verwaltet.

9. Die Datenkommunikations-Verwaltungskomponente (609, 700) nach einem der Ansprüche 1 bis 8, wobei es sich bei den Schnittstellen der Datenverbindungsschicht um Schnittstellen handelt, die zur zeitempfindlichen Vernetzung fähig sind.

10. Die Datenkommunikationsverwaltungskomponente (609, 700) nach Anspruch 9, wobei der Netzwerk-Controller (611, 612) ein zentralisierter Benutzerkonfigurator (611) oder ein zentralisierter Netzwerkkonfigurator (612) gemäß zeitempfindlicher Vernetzung ist.

11. Die Datenkommunikationsverwaltungskomponente (609, 700) nach einem der Ansprüche 1 bis 10, wobei das Kommunikationsnetz ein Ethernet ist.

12. Ein Verfahren zur Durchführung von Datenkommunikation, aufweisend
Aufbauen, in einer Datenverarbeitungsvorrichtung (600), auf der mehrere Softwareanwendungen (601, 602, 603) laufen und die einen physischen Anschluss an ein Kommunikationsnetz hat, eines internen Netzes von Komponenten (608) der Datenverarbeitungsvorrichtung (600), um
für jede der Anwendungen die für die Anwendung bestimmten Daten, die vom Kommunikationsnetz über den physischen Port (606) empfangen wurden, für die Anwendung verfügbar zu machen;
für jede der Anwendungen Daten, die die Anwendung über das Kommunikationsnetz zu senden beabsichtigt, an den physischen Port zu liefern; und
eine Kommunikation zwischen den Anwendungen (601, 602, 603) über das interne Netz (608) ermöglichen,
Erzeugen einer Darstellung des internen Netzes (608) als ein Netz von Schnittstellen der Datenverbindungsschicht gemäß einem Datenkommunikationsprotokoll für die Datenkommunikation mit garantierter Leistung,
Bereitstellen der erzeugten Darstellung an einen Netzwerk-Controller (611, 612), wobei der Netzwerk-Controller (611, 612) Zeitplanungsinformationen für Schnittstellen der Datenverbindungsschicht bereitstellt, um Datenkommunikation gemäß dem Datenkommunikationsprotokoll zu ermöglichen;
Empfangen von Zeitplanungsinformationen für die Schnittstellen der Datenverbindungsschicht der vom Zeitplaner erzeugten Darstellung; und
Konfigurieren des internen Netzwerks (608) der Datenverarbeitungsvorrichtung (600) in Übereinstimmung mit den Zeitplanungsinformationen.

## Revendications

1. Composant de gestion de communication de données (609, 700) configuré pour
établir, dans un dispositif de traitement de données (600) configuré pour exécuter plusieurs applications logicielles et ayant un port physique (606) vers un réseau de communication, un réseau interne de composants (608) du dispositif de traitement de données (600) pour
rendre, pour chacune des applications (601, 602, 603), des données destinées à l'application (601, 602, 603) reçues du réseau de communication par l'intermédiaire du port physique (606) disponibles pour l'application (601, 602, 603) ;
fournir, au port physique (606), pour chacune des applications (601, 602, 603), des données que l'application (601, 602, 603) a l'intention d'envoyer via le réseau de communication ; et
permettre une communication entre les applications (601, 602, 603) par l'intermédiaire du réseau interne (608),
générer une représentation du réseau interne (608) en tant que réseau d'interfaces de couche de liaison de données conformément à un protocole de communication de données pour une communication de données avec une performance garantie,
fournir la représentation générée à un contrôleur de réseau (611, 612), dans lequel le contrôleur de réseau (611, 612) est configuré pour fournir des informations de contrôle pour des interfaces de couche de liaison de données afin de permettre une communication de données conformément au protocole de communication de données ;
recevoir des informations de contrôle pour les interfaces de couche de liaison de données de la représentation générée par le contrôleur de réseau (611, 612) ; et
configurer le réseau interne (608) du dispositif de traitement de données (600) en fonction des informations de contrôle.

2. Composant de gestion de communication de données (609, 700) selon la revendication 1, dans lequel le composant de gestion de communication de données est configuré pour fournir la représentation générée à un système de gestion et d'orchestration externe au dispositif de traitement de données (600) et recevoir des informations de protocole de communication de données du système d'orchestration et de gestion concernant des exigences de trafic pour une ou plusieurs des applications.

3. Composant de gestion de communication de données (609, 700) selon la revendication 1 ou 2, dans lequel la performance garantie comprend au moins une latence maximale garantie et/ou une gigue maximale garantie.

4. Composant de gestion de communication de données (609, 700) selon l'une quelconque des revendications 1 à 3, dans lequel les multiples applications (601, 602, 603) comprennent au moins une application exécutée dans une machine virtuelle sur le dispositif de traitement de données (600) et/ou comprennent au moins une application exécutée dans un conteneur (601, 602, 603) d'une conteneurisation d'application sur le dispositif de traitement de données (600) .

5. Composant de gestion de communication de données (609, 700) selon l'une quelconque des revendications 1 à 4, dans lequel les applications (601, 602, 603) comprennent au moins une application (601, 602, 603) s'exécutant dans une machine virtuelle sur le dispositif de traitement de données (600) et/ou comprennent au moins une application (601, 602, 603) s'exécutant dans un conteneur sur le dispositif de traitement de données (600) et le composant de gestion de communication de données (609, 700) est configuré pour mapper une abstraction de point de connexion d'une carte d'interface de réseau virtuelle de l'application à l'une des interfaces de couche de liaison de données.

6. Composant de gestion de communication de données (609, 700) selon l'une quelconque des revendications 1 à 5, dans lequel l'une des interfaces de couche de liaison de données est attachée au port physique (606) et dans lequel le réseau interne (608) connecte chaque application aux autres des applications (601, 602, 603) ainsi qu'à l'interface de couche de liaison de données attachée au port physique.

7. Composant de gestion de communication de données (609, 700) selon l'une quelconque des revendications 1 à 6, dans lequel le dispositif de traitement de données (600) comprend plusieurs ports physiques et plusieurs ensembles d'applications, dans lequel chaque application est associée à l'une des interfaces du réseau interne (608) et le réseau interne (608) de composants rend, pour chacune des applications, des données destinées à l'application reçues du réseau de communication via l'interface associée à l'application disponibles pour l'application et fournit les données que l'application a l'intention d'envoyer par l'intermédiaire du réseau de communication à l'interface associée à l'application.

8. Composant de gestion de communication de données (609, 700) selon l'une quelconque des revendications 1 à 7, configuré pour établir et gérer le réseau interne (608) de composants du dispositif de traitement de données (600) conformément à des exigences de communication de données reçues d'un composant proxy qui gère le mappage de chacune des applications (601, 602, 603) à un point d'extrémité de communication de données correspondant du protocole de communication de données.

9. Composant de gestion de communication de données (609, 700) selon l'une quelconque des revendications 1 à 8, dans lequel les interfaces de couche de liaison de données sont des interfaces capables de mise en réseau sensible au temps.

10. Composant de gestion de communication de données (609, 700) selon la revendication 9, dans lequel le contrôleur de réseau (611, 612) est un configurateur d'utilisateur centralisé (611) ou un configurateur de réseau centralisé (612) selon la mise en réseau sensible au temps.

11. Composant de gestion de communication de données (609, 700) selon l'une quelconque des revendications 1 à 10, dans lequel le réseau de communication est un Ethernet.

12. Procédé pour exécuter une communication de données, comprenant les étapes consistant à :
établir, dans un dispositif de traitement de données (600) exécutant plusieurs applications logicielles (601, 602, 603) et ayant un port physique vers un réseau de communication, un réseau interne de composants (608) du dispositif de traitement de données (600) pour
rendre, pour chacune des applications, des données destinées à l'application reçues du réseau de communication via le port physique (606) disponibles pour l'application ;
fournir, au port physique (606), pour chacune des applications, des données que l'application a l'intention d'envoyer via le réseau de communication ; et
permettre la communication entre les applications (601, 602, 603) par l'intermédiaire du réseau interne (608),
générer une représentation du réseau interne (608) en tant que réseau d'interfaces de couche de liaison de données conformément à un protocole de communication de données pour une communication de données avec une performance garantie,
fournir la représentation générée à un contrôleur de réseau (611, 612), dans lequel le contrôleur de réseau (611, 612) fournit des informations de planification pour des interfaces de couche de liaison de données afin de permettre une communication de données conformément au protocole de communication de données ;
recevoir des informations de planification pour les interfaces de couche de liaison de données de la représentation générée par le planificateur ; et
configurer le réseau interne (608) du dispositif de traitement de données (600) en fonction des informations de planification.
